**Europäisches Patentamt**

**European Patent Office**

**Office européen des brevets**

(19)

(11) Veröffentlichungsnummer: **0 072 397**
**B1**

(12) ## EUROPÄISCHE PATENTSCHRIFT

(45) Veröffentlichungstag der Patentschrift:
**10.07.85**

(51) Int. Cl.⁴: **C 01 B 33/28,** B 01 J 20/18

(21) Anmeldenummer: **82104587.9**

(22) Anmeldetag: **26.05.82**

(54) **Verfahren zur Herstellung von ultrastabilen Zeolithen.**

(30) Priorität: **17.08.81 DE 3132380**

(43) Veröffentlichungstag der Anmeldung:
**23.02.83 Patentblatt 83/8**

(45) Bekanntmachung des Hinweises auf die Patenterteilung:
**10.07.85 Patentblatt 85/28**

(84) Benannte Vertragsstaaten:
**AT BE CH DE FR GB IT LI LU NL SE**

(56) Entgegenhaltungen:
**DE - A - 2 510 700**
**DE - A - 2 510 740**
**DE - B - 1 667 544**
**US - A - 4 273 753**

(73) Patentinhaber: **Degussa Aktiengesellschaft,**
**Weissfrauenstrasse 9, D-6000 Frankfurt am Main 1 (DE)**

(72) Erfinder: **Strack, Hans, Dr., Riemenschneiderstrasse 1,**
**D-8755 Alzenau (DE)**
Erfinder: **Kleinschmit, D. Peter, Wildaustrasse 19,**
**D-6450 Hanau 9 (DE)**

EP 0 072 397 B1

# 0 072 397

## Beschreibung

Die Erfindung betrifft ein Verfahren zur Herstellung von ultrastabilen Zeolithen des Y-Typs mit einer Zellkonstanten von 24,20 bis 24,60 Å und einem $Al_2O_3$-Gehalt von 4,1 bis 18,4 Gew.-% entsprechend einem $SiO_2/Al_2O_3$-Verhältnis von 6,5 bis 39,9 durch thermische Dealuminierung von aktivierten Zeolithen des Y-Typs durch Behandeln mit gasförmigem Halogensilan unter Ausschluß von Feuchtigkeit, anschließendem Waschen mit Wasser und Trocknen.

Allgemein versteht man unter Zeolithen eine Gruppe von kristallinen, hydratisierten Alumosilikaten ein- oder mehrstufiger Basen, die ihr Wasser ohne Änderung der Kristallstruktur abgeben und andere Verbindungen anstelle des entfernten Wassers aufnehmen können und die weiterhin zum Basenaustausch fähig sind.

In ihrem Kristallgitter liegt eine starre dreidimensionale Raumnetzstruktur aus $SiO_4$- und $AlO_4$-Tetraedern vor, bei der die Tetraeder durch gemeinsame Sauerstoffatome verbunden sind. Es bilden sich auf diese Weise Hohlräume mit konstanten Abmessungen, die durch regelmäßig angeordnete Kanäle miteinander verbunden sind.

Seit mehr als 20 Jahren werden diese Eigenschaften der Zeolithe bei ihrer industriellen Verwendung als selektive Adsorptionsmittel oder als Katalysatoren genutzt.

Besonderes Interesse fanden dabei Zeolithe des Faujasit-Typs. Sie entsprechen der allgemeinen Formel $M_{2/n} \cdot Al_2O_3 \cdot ySiO_2 \cdot zH_2O$ wobei M ein- oder mehrwertiges Metall wie z. B. Na, K, Mg, $NH_4^+$ oder Ca sein kann, n die Wertigkeit des Metall angibt, y einen Zahlenwert von 2 bis 3 (Zeolith X) bzw. 3 bis 6,4 (Zeolith Y) entspricht und z Werte von 0 bis 9 annehmen kann.

Zeolithe des Typs Y bilden einen wesentlichen Bestandteil der meisten heute im Einsatz befindlichen Crackkatalysatoren. [J. S. Magee, J. J. Blazek, »Preparation and Performance of Zeolite Cracking Catalysts«, in »Zeolite Chemistry and Catalysis«, ACS-Monograph 171, Washington DC, 1976, Seiten 615 bis 713).

Die in Crack-Katalysatoren eingesetzten Zeolithe vom Typ Y besitzen in der Na-Form im allgemeinen einen $Al_2O_3$-Gehalt von ca. 22 Gew.-% entsprechend einem $SiO_2/Al_2O_3$-Verhältnis von ca. 5. Na-Y-Zeolithe mit einem wesentlich höheren $SiO_2/Al_2O_3$-Verhältnis konnten bisher großtechnisch nicht hergestellt werden, obwohl schon gezeigt wurde, daß sie mit diesem hohen $SiO_2/Al_2O_3$-Verhältnis in Katalysatoren eine höhere Stabilität gegenüber Wasserdampf bei hohen Temperaturen besitzen (vgl. DE-PS 1 667 544).

Ganz besonders geeignet für Crack-Katalysatoren sind die sogenannten »ultrastabilen Zeolithe«, die zum ersten Mal durch C. V. Mc Daniel und P. K. Maher (Molecular Sievers, p. 186, Soc. Chem. Ind., London 1968) beschrieben wurden. Sie zeigen eine hohe thermische Belastbarkeit und eine ausgezeichnete Stabilität gegenüber Wasserdampf. Kristallographisch sind sie durch eine gegenüber den Ausgangszeolithen um 1—1,5% geschrumpfte Einheitszelle gekennzeichnet. Diese Schrumpfung der Einheitszelle hat die Entfernung von Aluminiumatomen aus dem Kristallgitter zur Voraussetzung.

Seit der ersten Beschreibung sind eine Reihe von Herstellungsverfahren beschrieben worden. Bekannt ist gemäß C. V. Mc. Daniel und P. K. Maher, »Zeolite Stability and Ultrastabile Zeolites«, in »Zeolite Chemistry and Catalysis«, ACS Monograph 171, Washington D.C., 1976, Seiten 285 bis 331, ein Verfahren bei dem man zuerst einen Y-Zeolithen in der Na-Form synthetisiert, die Natriumionen im wäßrigen System gegen Ammoniumionen austauscht und dieses Vorprodukt anschließend bei Temperaturen von 600—825°C in einer wasserhaltigen Atmosphäre erhitzt. Diese Schritte kann man gegebenenfalls mehrfach wiederholen.

Ebenso ist gemäß dieser Literaturstelle ein Verfahren bekannt, bei dem man einen Na-Y-Zeolith mit Komplexbildnern wie zum EDTA in wäßriger Lösung behandelt und anschließend bei 540—820°C calciniert.

Beide Verfahren sind mit Nachteilen verbunden. Das erste benutzt zwar billige und großtechnisch leicht verfügbare Ammoniumsalze zum Ionenaustausch, erfordert aber aufwendige Umweltschutzmaßnahmen, da aus Abwasser und Abluft Ammoniumionen bzw. Ammoniak zu entfernen sind. Das zweite vermeidet dies zwar, kommt aber wegen der Verwendung der kostspieligen EDTA großtechnisch nicht in Betracht.

Aus der US-A 4 273 753 ist ein Verfahren zur Dealuminierung von kristallinen Aluminiumsilikatzeolithen mittels $SiCl_4$ bekannt.

Weiterhin ist ein Verfahren bekannt, bei dem man einen Na-Y-Zeolith mit gasförmigem $SiCl_4$ bei Temperaturen von 457°C bis 557°C reagieren läßt. Man erhält ultrastabile Zeolithe mit einem $SiO_2/Al_2O_3$-Verhältnis von 40—100. [H. Beyer, J. Belenykaja, Catalysis by Zeolites, Seite 203 ff, 1980, Elsevier, Amsterdam).

Die Zellkonstanten der nach der letztgenannten Methode hergestellten Y-Zeolithe haben die Werte $a_0$ von 24,15 bis 24,19 Å.

Die Nachteile dieses bekannten Verfahrens liegen aber darin, daß die Reaktionstemperatur relativ hoch liegt und man keine $SiO_2/Al_2O_3$-Verhältnisse unterhalb von 40 gezielt einstellen kann.

Aufgabe der Erfindung ist ein Verfahren zur Herstellung ultrastabiler Y-Zeolithen mit einem $Al_2O_3$-Gehalt von 4,1 bis 18,4 Gew.-% entsprechend einem $SiO_2/Al_2O_3$-Verhältnis von 6,5 bis 39,9 aus Zeolithen, bei dem die Nachteile der bekannten Verfahren vermieden werden.

2

Gegenstand der Erfindung ist ein Verfahren zur Herstellung von ultrastabilen Zeolithen des Y-Typs mit einer Zellkonstanten von 24,20 bis 24,60 Å und einem $Al_2O_3$-Gehalt von 4,1 bis 18,4 Gew.-% entsprechend einem $SiO_2/Al_2O_3$-Verhältnis von 6,5 bis 39,9 durch thermische Dealuminierung von aktivierten Zeolithen des Y-Typs durch Behandeln mit gasförmigen Halogensilan unter Ausschluß von Feuchtigkeit, anschließendem Waschen mit Wasser und Trocknen, das dadurch gekennzeichnet ist, daß man als Ausgangszeolithen einen im Drehrohr aktivierten NaY-Zeolithen mit einem $Al_2O_3$-Gehalt von 18,5 bis 29,7 Gew.-%, bezogen auf den wasserfreien Zeolithen, entsprechend einem $SiO_2/Al_2O_3$-Verhältnis von 3 bis 6,4, und einem maximalen Wassergehalt von maximal 2 Gew.-% einsetzt, diesen Ausgangszeolithen in einem Drehrohrofen mit dem Halogensilan $SiCl_4$, welches mit dem Trägergas Stickstoff im Volumen Verhältnis von Trägergas zu Halogensilan von 0,01 bis 1000 verdünnt ist, bei einer Temperatur von 150 bis 450° C umsetzt, wobei man bei einem hohen $Al_2O_3$-Gehalt der Ausgangsverbindung die Umsetzung bei niedrigen Temperaturen einsetzen läßt und allmählich auf die gewünschte Temperatur steigert, das erhaltene Produkt bei Temperaturen von 200 bis 800° C im Drehrohr tempert, anschließend das erhaltene Produkt bis zur Halogenidfreiheit mit Wasser auswäscht und trocknet.

Als Trägergas für den Halogensilanstrom wird Stickstoff verwendet. Wesentlich für den gezielten Ablauf der erfindungsgemäßen Umsetzung ist, daß der Gasstrom keine Feuchtigkeit enthält. Das Volumenverhältnis von Trägergas zu Halogensilan kann von 0,01 bis 1000 variieren.

Die Reaktionstemperatur wählt man vorteilhafterweise zwischen 200° und 400° C, bevorzugt zwischen 250° und 380° C. Die geeignete Behandlungstemperatur kann von der Zusammensetzung des eingesetzten Zeolith Y anhängig sein. Er ist vorteilhaft, bei einem hohen $Al_2O_3$-Gehalt der Ausgangsverbindung, die Umsetzung bei niedrigeren Temperaturen einsetzen zu lassen und allmählich auf die gewünschte Temperatur zu steigen.

Das so erhaltene Produkt wird gegebenenfalls getempert.

In einer bevorzugten Ausführungsform wird die Temperung bei Temperaturen von 200° bis 800° C durchgeführt.

Die Ermittlung der Zellkonstanten $a_0$ erfolgt mit Hilfe des Röntgenbeugungsspektrums. Es zeigt sich, daß man innerhalb des erfindungsgemäßen Temperaturbereiches bei einer bestimmten Temperatur nur einen bestimmten Dealuminierungsgrad erreichen kann. Dieser wird durch die Verlängerung der Reaktionszeit nur unwesentlich beeinflußt.

Die Zellkonstanten der Endprodukte sind von der Reaktionstemperatur abhängig. Dem bevorzugten Temperaturbereich entsprechen folgende Werte:

| T | $a_0$ |
|---|---|
| 200° C | $24,42 \pm 0,02$ |
| 250° C | $24,37 \pm 0,02$ |
| 380° C | $24,26 \pm 0,02$ |
| 420° C | $24,23 \pm 0,02$ |

Vorteilhaft ist es, die Dealuminierung in einem Drehrohrofen durchzuführen. Ein Drehrohrofen kann auch für den der Dealuminierung vorausgehenden Aktivierungsschritt und für den anschließenden Temperschritt verwendet werden.

Nach beendeter Reaktion wird das Produkt bis zur Halogenidfreiheit mit Wasser ausgewaschen, getrocknet und in bekannter Weise weiterverarbeitet.

Das erfindungsgemäße Verfahren weist gegenüber dem Stand der Technik große Vorteile auf. Nach einem bekannten Verfahren müssen Ammoniumionen im großen Überschuß für den Austausch von Na-Y-Zeolithen eingesetzt werden. Das erfordert aufwendige Umweltschutzmaßnahmen, da sonst Abwasser und Abluft durch Ammoniumionen bzw. Ammoniak stark belastet würden.

Die Verwendung von EDTA nach einem anderen bekannten Verfahren ist viel zu kostspielig. Demgegenüber fallen bei der Dealuminierung mit Chlorsilanen, wie z. B. $SiCl_4$ nur NaCl und $AlCl_3$ als Nebenprodukte an, Verbindungen, die in Kläranlagen leicht zu beherrschen sind.

Zudem handelt es sich bei Verwendung der Halogensilane, insbesondere der bevorzugten Chlorsilane um kostengünstige Verbindungen.

Nach dem erfindungsgemäßen Verfahren ist es zum ersten Mal möglich, durch Dealuminierung mit Halogensilanen gezielt bei Temperaturen von $\leq 450° C$ ultrastabile Zeolithe mit einem $Al_2O_3$-Gehalt von 4,1 bis 18,4 Gew.-% herzustellen.

0 072 397

### Beispiele

Als Ausgangsverbindung dient ein Na-Y-Zeolith mit einem $SiO_2/Al_2O_3$-Verhältnis von 5,0 entsprechend einem $Al_2O_3$-Gehalt von 22,0 Gew.-% und einer Zellkonstante von $a_0 = 24,64$ Å. Die Substanz wurde in einem Glasrohr bei 380"C aktiviert. Nach der Aktivierung und dem Einstellen der gewünschten Reaktionstemperatur wurde ein mit $SiCl_4$ gesättigter, trockener Stickstoffstrom mit 15 l/h über den Zeolith geführt.

Nach Beendigung der Reaktion wurde das Produkt bei 560"C getempert, auf Raumtemperatur abgekühlt, bis zur Chlorid-Freiheit mit destilliertem Wasser gewaschen, bei 110"C getrocknet und anschließend der röntgenographischen Analyse zugeführt.

Tabelle 1 zeigt die Abhängigkeit des Dealuminierungsgrades von der Reaktionstemperatur.

Der $Al_2O_3$-Gehalt wurde naßchemisch ermittelt.

### Tabelle 1

| Reaktionstemperatur °C | Zellkonstante $a_0$ (Å) | $Al_2O_3$ Gew.-% | $SiO_2/Al_2O_3$ |
|---|---|---|---|
| 200 | 24,42 | 18,0 | 7 |
| 250 | 24,37 | 16,3 | 8 |
| 340 | 24,28 | 11,5 | 12 |
| 420 | 24,24 | 5,8 | 26 |
| 450 | 24,22 | 4,1 | 39 |

Die Reaktionsdauer betrug 3 Stunden.

Tabelle 2 belegt, daß eine Verlängerung der Reaktionszeit bei konstanter Temperatur nur einen unwesentlichen Einfluß auf den Aluminiumgehalt des Zeolithgitters ausübt.

### Tabelle 2

| Reaktionsdauer (h) | Reaktionstemperatur °C | Zellkonstante $a_0$ Å | $Al_2O_3$ Gew.-% | $SiO_2/Al_2O_3$ |
|---|---|---|---|---|
| 3 | 250 | 24,37 | 14,3 | 8 |
| 5 | 250 | 24,36 | 14,8 | 8 |

### Patentanspruch

Verfahren zur Herstellung von ultrastabilen Zeolithen des Y-Typs mit einer Zellkonstanten von 24,20 bis 24,60 Å und einem $Al_2O_3$-Gehalt von 4,1 bis 18,4 Gew.-% entsprechend einem $SiO_2/Al_2O_3$-Verhältnis von 6,5 bis 39,9 durch thermische Dealuminierung von aktivierten Zeolithen des Y-Typs durch Behandeln mit gasförmigem Halogensilan unter Ausschluß von Feuchtigkeit, anschließendem Waschen mit Wasser und Trocknen, dadurch gekennzeichnet, daß man als Ausgangszeolithen einen im Drehrohr aktivierten NaY-Zeolithen mit einem $Al_2O_3$-Gehalt von 18,5 bis 29,7 Gew.-%, bezogen auf den wasserfreien Zeolithen, entsprechend einem $SiO_2/Al_2O_3$-Verhältnis von 3 bis 6,4, und einem maximalen Wassergehalt von maximal 2 Gew.-% einsetzt, diesen Ausgangszeolithen in einem Drehrohrofen mit dem Halogensilan $SiCl_4$, welches mit dem Trägergas Stickstoff im Volumen Verhältnis von Trägergas zu Halogensilan von 0,01 bis 1000 verdünnt ist, bei einer Temperatur von 150 bis 450°C umsetzt, wobei man bei einem hohen $Al_2O_3$-Gehalt der Ausgangsverbindung die Umsetzung bei niedrigen Temperaturen einsetzen läßt und allmählich auf die gewünschte Temperatur steigert, das erhaltene Produkt bei Temperaturen von 200 bis 800"C im Drehrohr tempert, anschließend das erhaltene Produkt bis zur Halogenidfreiheit mit Wasser auswäscht und trocknet.

4

**0 072 397**

## Claim

Process for the production of ultra-stable zeolites of the Y-type with a cell constant of from 24.20 to 24.60 Å and an $Al_2O_3$ content of from 4.1 to 18.4% by weight corresponding to an $SiO_2/Al_2O_3$ ratio of from 6.5 to 39.9, by thermal dealuminisation of activated zeolites of the Y-type by treatment with gaseous halosilane with the exclusion of moisture, subsequent washing with water and drying, characterised in that an NaY-zeolite which has been activated in a rotary tube and has an $Al_2O_3$ content of from 18.5 to 29.7% by weight, based on the water-free zeolite, corresponding to an $SiO_2/Al_2O_3$ ratio of from 3 to 6.4 and a maximum water content of at most 2% by weight is used as starting zeolite, which starting zeolite is reacted at a temperature of from 150 to 450°C in a rotary tube furnace with the halosilane $SiCl_4$ which has been diluted with nitrogen as carrier gas in a volume ratio of carrier gas to halosilane of from 0.01 to 1000, the reaction starting at a low temperature in the case of a starting component with a high $Al_2O_3$ content and gradually rising to the desired temperature, the resulting product being tempered in the rotary tube at a temperature of from 200 to 800°C and the resulting product then being washed-out with water until free of the halide and dried.

## Revendication

Procédé pour la production de zéolithes ultrastables du type Y avec une constante cellulaire de 24.20 à 24.60Å et une teneur en $Al_2O_3$ de 4,1 à 18,4% en poids, soit un rapport $SiO_2/Al_2O_3$ de 6.5 à 39,9, par désalumination thermique de zéolithes de type Y activées, par traitement avec des halogénosilanes gazeux, en excluant l'humidité, puis lavage à l'eau subséquent et séchage, procédé caractérisé en ce que comme zéolithe de départ, on utilise une zéolithe-Y-Na activée en tube rotatif, avec une teneur en $Al_2O_3$ de 18,5 à 29,7% en poids, calculé sur la zéolithe anhydre, soit un rapport $SiO_2/Al_2O_3$ de 3 à 6,4, et une teneur en eau de 2% en poids au maximum, que l'on fait réagir ces zéolithes de départ dans un for tubulaire rotatif avec l'halogénosilane $SiCl_4$ qui est dilué avec de l'azote servant de gaz vecteur, dans un rapport volumique du gaz vecteur à l'halogénisane de 0,01 à 1000, à une temperature de 150 à 450°C, que si le composé de départ a une teneur élevée en $Al_2O_3$ on commence la réaction à basse température et élève la température progressivement au niveau souhaité, que l'on soumet le produit obtenu à un traitement thermique entre 200 et 800°C, dans le four rotatif, puis on lave à l'eau le produit obtenu jusqu'à élimination totale des halogénures et le sèche.

5